# DEMANDE DE BREVET EUROPEEN

(11) **EP 1 055 451 A1**
(43) Date de publication de la demande: **29.11.2000**
(21) Numéro de dépôt: 00401422.1
(22) Date de dépôt: 23.05.2000
(51) Int. Cl.: B01F 17/00

(54) **Utilisation d'alkylpolyglycosides comme inverseur d'émulsions de polymeres, procédé d'inversion d'émulsions, latex inverse auto inversible et leurs utilisations industrielles.**

(30) Priorité: 28.05.1999 FR 9906767
(71) Demandeur: SOCIETE D'EXPLOITATION DE PRODUITS POUR LES INDUSTRIES CHIMIQUES, S.E.P.P.I.C., 75321 Paris Cédex 07 (FR)
(72) Inventeur: Carrausse, Maryse, 81100 Castres (FR); Tabacchi, Guy, 81100 Castres (FR); Mallo, Paul, 78400 Chatou (FR); Boiteux, Jean-Pierre, 81710 Saix (FR); Milius, Alain, 06000 Nice (FR); Michel, Nelly, 94700 Maisons Alfort (FR)
(74) Mandataire: Conan, Philippe Claude

(57) **Abrégé**

Utilisation d'un composé de formule (I) :

R₁-O-[CH(R₂)-CH₂-O]ₙ-(G)ₓ-H (I)

dans laquelle R₁ représente un radical hydrocarboné linéaire ou ramifié, saturé ou insaturé comprenant de 1 à 30 atomes de carbones, R₂ représente un atome d'hydrogène ou radical alkyle comprenant 1 ou 2 atomes de carbone, G représente le reste d'un saccharide, x représente un nombre décimal compris entre 1 et 5, et n est égal, soit à zéro, soit à un nombre entier compris entre 1 et 30, ou d'un mélange de composés de formule (I), pour inverser une émulsion eau dans huile (E/H), comprenant au moins un polymère hydrosoluble, linéaire, branché ou réticulé, en une émulsion huile dans eau (H/E) ; procédé d'inversion d'une émulsion eau dans huile (E/H), comprenant au moins un polymère hydrosoluble, linéaire, branché ou réticulé, en une émulsion huile dans eau (H/E) ; latex inverse et utilisations industrielles.

## Description

La présente demande concerne une nouvelle utilisation des alkyl poly glycosides. Les alkylpolyglycosides sont des agents tensioactifs non ioniques connus. Ils entrent par exemple, dans la composition de produits anti-mousse, comme ceux décrits dans les demandes de brevet publiées sous les numéros EP 0489777, WO 96/33255 ou WO 98/17379 ou de produits détergents, comme ceux décrits dans les demandes de brevet publiées sous les numéros EP 0070074, EP 0510870, WO 91/11506, WO 92/06161 ou WO 93/07160.

Dans le cadre de ses recherches sur le développement de nouveaux agents modificateurs des propriétés rhéologiques de solutions aqueuses, la demanderesse a découvert que les alkyl polyglycosides possédaient la propriété d'être de meilleurs inverseurs d'émulsions que ceux de l'état de la technique, et que les émulsions résultantes étaient plus stables.

L'invention a donc pour objet l'utilisation d'un composé de formule (l) :

R₁-O-[CH(R₂)-CH₂-O]ₙ-(G)ₓ-H (I)

dans laquelle R₁ représente un radical hydrocarboné linéaire ou ramifié, saturé ou insaturé, comprenant de 1 à 30 atomes de carbones, R₂ représente un atome d'hydrogène ou radical alkyle comprenant 1 ou 2 atomes de carbone, G représente le reste d'un saccharide, x représente un nombre décimal compris entre 1 et 5 et n est égal, soit à zéro, soit à un nombre entier compris entre 1 et 30, ou d'un mélange de composés de ladite formule (I), pour inverser une émulsion eau dans huile (E/H) comprenant au moins un polymère hydrosoluble linéaire, branché ou réticulé, en une émulsion huile dans eau (H/E).

Par radical hydrocarboné linéaire ou ramifié, saturé ou insaturé, comprenant de 1 à 30 atomes de carbone, on désigne pour R₁, dans la formule (I) telle que définie précédemment, notamment les radicaux alkyles ou les radicaux alkènyle. R₁ représente plus particulièrement un radical choisi parmi les radicaux hexyle, heptyle, octyle, nonyle, décyle, undécylé, undécènyle, dodécyle, tridécyle, tetradécyle, pentadécyle, hexadécyle, heptadécyle, octadécyle, octadécènyle, octadécatriènyle, octadécadiènyle, eicosanyle ou béhènyle, lesdits radicaux étant linéaires ou ramifiés. Selon un aspect particulier de la présente invention, R₁ représente un radical choisi parmi les radicaux comportant de 8 à 18 atomes de carbone.

Par reste d'un saccharide, on désigne pour G, un radical bivalent résultant de l'enlèvement sur une molécule de sucre, d'une part d'un atome d'hydrogène d'un groupe hydroxyle et d'autre part du groupe hydroxyle anomérique. Le terme saccharide désigne notamment le glucose ou dextrose, le fructose, le mannose, le galactose, l'altrose, l'idose, l'arabinose, le xylose, le ribose, le gulose, le lyxose, le maltose, le maltotriose, le lactose, le cellobiose, le dextrane, le talose, l'allose, le raffinose, le lévoglucane, la cellulose ou l'amidon. La structure oligomérique (G)ₓ peut se présenter sous toute forme d'isomérie, qu'il s'agisse d'isomérie optique, d'isomérie géométrique ou d'isomérie de positon, elle peut aussi représenter un mélange d'isomères. Dans la formule (I) telle que définie précédemment, le radical R₁-O-[CH(R₂)-CH₂-O]ₙ- est lié à G, par le carbone anomérique de manière à former une fonction acétal. Le groupe divalent -[CH(R₂)-CH₂-O]ₙ- représente, soit une chaîne composée uniquement de groupes éthoxyle (R₂=H), soit une chaîne composée uniquement de groupes propoxyle (R₂=CH₃), soit une chaîne composée à la fois de groupes éthoxyle et de groupes propoxyle. Dans ce dernier cas, les fragments -CH₂-CH₂-O- et -CH(CH₃)-CH₂-O- sont distribués dans ladite chaîne, de façon séquencée ou aléatoire. x, qui représente dans la formule (I) le degré moyen de polymérisation du saccharide, est plus particulièrement compris entre 1 et 3, notamment entre 1,05 et 2,5 et tout particulièrement entre 1,1 et 2,0. Selon une variante préférée de la présente invention, G représente le reste du glucose. Comme composés de formule appropriés à leur mise en oeuvre dans l'utilisation objet de la présente invention, il y a par exemple le mélange de composés de formule (I) telle que définie précédemment, commercialisé par la société SEPPIC sous le nom SIMULSOL™ SL 10, contenant environ 85% en poids d'un composé de formule (I), dans laquelle G représente le reste du glucose, x est égal à environ 1,45, n est égal à 0 et R₁ représente un radical décyle, environ 7,5% en poids d'un composé de formule (I), dans laquelle G représente le reste du glucose, x est égal à environ 1,45, n est égal à 0 et R₁ représente un radical dodécyle et environ 7,5% en poids d'un composé de formule (I), dans laquelle G représente le reste du glucose, x est égal à environ 1,45, n est égal à 0 et R₁ représente un radical tétradécyle ; ou le mélange de composés de formule (I) telle que définie précédemment, commercialisé par la société SEPPIC sous le nom SIMULSOL™ SL 26, contenant environ 70% en poids d'un composé de formule (I), dans laquelle G représente le reste du glucose, x est égal à environ 1,45, n est égal à 0 et R₁ représente un radical dodécyle ; environ 25% en poids d'un composé de formule (I), dans laquelle G représente le reste du glucose, x est égal à environ 1,45, n est égal à 0 et R₁ représente un radical tétradécyle et environ 5% en poids d'un composé de formule (I), dans laquelle G représente le reste du glucose, x est égal à environ 1,45, n est égal à 0 et R₁ représente un radical hexadécyle.

Par émulsion eau dans huile (E/H) comprenant au moins un polymère hydrosoluble, on désigne toute émulsion, dans laquelle la phase aqueuse contient au moins un polymère en solution et dans laquelle la phase continue est un milieu organique non miscible dans l'eau. Le polymère présent dans la phase aqueuse est généralement dérivé, soit d'un monomère insaturé contenant un groupe fonctionnel susceptible d'être partiellement ou totalement ionisé, soit de monomères différents dont au moins un de ces monomères contient un groupe fonctionnel susceptible d'être partiellement ou totalement ionisé. Le polymère dissout dans la phase aqueuse peut être un homopolymère, un copolymère, un terpolymère ou être issu de plus de trois monomères de structure chimique différente.

L'invention a plus particulièrement pour objet, l'utilisation d'un composé de formule (I) ou d'un mélange de composés de formule (I), telle que définie précédemment, pour inverser une émulsion eau dans huile (E/H) comprenant au moins un polymère choisi ou bien parmi les homopolymères à base d'un monomère possédant une fonction acide fort partiellement ou totalement salifiée ou bien parmi les homopolymères à base d'un monomère possédant une fonction acide faible partiellement ou totalement salifiée ou bien parmi les homopolymères à base d'un monomère cationique ou bien parmi les copolymères à base d'au moins un monomère possédant une fonction acide fort partiellement ou totalement salifiée, copolymérisé, soit avec au moins un monomère possédant une fonction acide faible partiellement ou totalement salifiée, soit avec au moins un monomère neutre ou bien parmi les copolymères à base d'un monomère cationique, copolymérisé, avec au moins un monomère neutre ou bien parmi les copolymères à base d'au moins un monomère possédant une fonction acide faible partiellement ou totalement salifiée, copolymérisé soit avec au moins un monomère possédant une fonction acide faible partiellement ou totalement salifiée, soit avec au moins un monomère neutre, en une émulsion huile dans eau (H/E).

Par partiellement ou totalement salifiée, on signifie que les fonctions acide fort ou acide faible sont partiellement ou totalement salifiées sous forme, notamment de sel de métal alcalin, tel que le sel de sodium ou le sel de potassium, de sel d'ammonium (NH₄⁺) ou de sel d'aminoalcool, tel que par exemple, le sel de monoéthanolamine (HOCH₂CH₂NH₃⁺)

La fonction acide fort du monomère en comportant, est notamment la fonction acide sulfonique ou la fonction acide phosphonique, lesdites fonctions étant partiellement ou totalement salifiées. Ledit monomère peut être par exemple, l'acide styrènesulfonique ou le méthacrylate de (2-sulfo éthyle), l'acide styrènephosphonique, partiellement ou totalement salifiée. Lorsque le monomère comporte une fonction acide fort, il s'agit de préférence de l'acide 2-méthyl 2-[(1-oxo 2-propènyl) amino] 1-propane-sulfonique (AMPS) partiellement ou totalement salifié sous forme de sel de sodium, de sel d'ammonium ou de sel de monoéthanolamine.

La fonction acide faible du monomère en comportant, est notamment la fonction acide carboxylique partiellement ou totalement salifiée. Ledit monomère en comportant est notamment choisi parmi l'acide acrylique, l'acide méthacrylique, l'acide itaconique ou l'acide maléique partiellement ou totalement salifié sous forme de sel de sodium, de sel de potassium de sel d'ammonium ou de sel de monoéthanolamine.

Lorsque le polymère est un copolymère à base d'un monomère possédant une fonction acide fort partiellement ou totalement salifiée, copolymérisé, avec au moins un monomère neutre, ledit monomère neutre est notamment choisi parmi l'acrylamide, le méthacrylamide, le vinyl pyrrolidone, l'acrylate de (2-hydroxy éthyle), l'acrylate de (2,3-dihydroxy propyle), le méthacrylate de (2-hydroxy éthyle) ou le méthacrylate de (2,3-dihydroxy propyle) ou un dérivé éthoxylé de poids moléculaire compris entre 400 et 1000, de chacun de ces esters hydroxylés décrits ci-dessus.

Par polymère branché, on désigne un polymère non linéaire qui possède des chaînes pendantes de manière à obtenir, lorsque ce polymère est mis en solution dans l'eau, un fort état d'enchevêtrement conduisant à des viscosités à bas gradient très importantes. Par polymère réticulé, on désigne un polymère non linéaire se présentant à l'état de réseau tridimensionnel insoluble dans l'eau, mais gonflable à l'eau et conduisant donc à l'obtention d'un gel chimique. La composition selon l'invention peut comporter des motifs réticulés et/ou des motifs branchés. Lorsque le polymère est réticulé et/ou branché, l'agent de réticulation et/ou l'agent ramification est notamment choisi parmi les composés diéthyléniques ou polyéthyléniques, et tout particulièrement parmi l'acide diallyloxyacétique ou un des sels et notamment son sel de sodium, le triallylamine, le triméthylol propanetriacrylate, le diméthacrylate d'éthylèneglycol, le diacrylate de diéthylène glycol, le diallylurée ou le méthylène bis(acrylamide). L'agent de réticulation et/ou de ramification est généralement utilisé dans la proportion molaire exprimée par rapport aux monomères mis en oeuvre, de 0,005% à 1%, notamment de 0,01% à 0,2% et plus particulièrement de 0,01% à 0,1%.

Selon un autre aspect de la présente invention, celle-ci a pour objet un procédé de préparation d'une émulsion huile dans eau (H/E) comprenant au moins un polymère hydrosoluble, linéaire, branché ou réticulé et plus particulièrement un polymère tel que défini précédemment, comprenant les étapes suivantes :
a) une étape de mélange d'une solution aqueuse, avec au moins un alkylpolyglycoside de formule (I) telle que définie précédemment,
b) une étape de mélange de la solution résultante de l'étape a), avec une émulsion eau dans huile (E/H) comprenant ledit polymère.

Selon un autre aspect l'invention a pour objet, un procédé de préparation d'une émulsion huile dans eau (H/E) comprenant au moins un polymère hydrosoluble, linéaire, branché ou réticulé, et plus particulièrement un polymère tel que défini précédemment, comprenant les étapes suivantes :
a) l'on émulsionne une solution aqueuse comprenant au moins un monomère dans une phase huile en présence d'un ou plusieurs agents émulsifiants de type eau dans huile (E/H),
b) l'on amorce la réaction de polymérisation par introduction dans l'émulsion formée en a), d'un initiateur de radicaux libres et d'éventuellement un co-initiateur puis on la laisse se dérouler,
c) lorsque la réaction de polymérisation est terminée, l'on introduit un ou plusieurs agents émulsifiants de type huile dans eau (H/E), dont l'un au moins est un composé de formule (I) telle que définie précédemment, à une température inférieure à 50°C, et
d) on mélange le latex inverse auto-inversible obtenu à l'étape c) avec la solution aqueuse dont on souhaite modifier les propriétés rhéologiques.

Par "agent émulsifiant du type eau dans huile", on désigne dans le procédé défini ci-dessus, des agents émulsifiants possédant une valeur HLB suffisamment faible pour fournir des émulsions eau dans huile, tels que les polymères tensioactifs commercialisés sous le nom de HYPERMER™ ou tels que les esters de sorbitan, comme le monooléate de sorbitan commercialisé par la Société SEPPIC sous le nom Montane™ 80 ou l'isostéarate de sorbitan commercialisé par SEPPIC sous le nom Montane™ 70. Lorsqu'il s'agit d'un mélange d'agents émulsifiants du type eau dans huile, la valeur HLB à prendre en considération est celle dudit mélange.

Selon une variante de ce procédé, le milieu réactionnel issu de l'étape b), est concentré par distillation, avant la mise en oeuvre de l'étape c).

Selon une mise en oeuvre préférée du procédé tel que défini précédemment, la réaction de polymérisation est amorcée par un couple oxydoréducteur générateur d'ions hydrogénosulfite (HSO₃⁻), tel que le couple hydroperoxyde de cumène -métabisulfite de sodium (Na₂S₂O₅) ou le couple hydroperoxyde de cumène-chlorure de thionyle (SOCI₂) à une température inférieure ou égale à 10°C, si désiré accompagné d'un agent co-initiateur de polymérisation tel que par exemple l'azo-bis(isobutyronitrile) puis conduite soit de manière quasi adiabatique jusqu'à une température supérieure ou égale à 50°C, soit en contrôlant la température.

L'invention a aussi pour objet une composition comprenant une phase huile, une phase aqueuse, au moins un agent émulsifiant de type eau dans huile (E/H), au moins un agent émulsifiant de type huile dans eau (H/E), sous forme d'un latex inverse auto-inversible comprenant de 20% à 70% en poids, et de préférence de 25% à 40% en poids, d'un polyélectrolyte linéaire, branché ou réticulé, caractérisé en ce que l'un au moins des agents émulsifiants de type huile dans eau (H/E), est un composé de formule (I) telle que définie précédemment.

Par "agent émulsifiant du type eau dans huile", on désigne dans la composition ci dessus, ceux définis pour le précédé tel que défini précédemment.

L'invention a plus particulièrement pour objet, une composition telle que définie ci-dessus dans laquelle l'agent émulsifiant du type eau dans huile (E/H), est choisi parmi les esters de sorbitan, comme le monooléate de sorbitan ou l'isostéarate de sorbitan.

Par "agent émulsifiant du type huile dans eau" (H/E), on désigne outre le composé de formule (I) tel que définie précédemment, des agents émulsifiants possédant une valeur HLB suffisamment élevée pour fournir des émulsions huile dans l'eau tels que, par exemple, les esters de sorbitan éthoxylés comme l'oléate de sorbitan éthoxylé à 20 moles d'oxyde d'éthylène, l'huile de ricin éthoxylée à 40 moles d'oxyde d'éthylène, le laurate de sorbitan éthoxylé à 20 moles d'oxyde d'éthylène commercialisés par la société SEPPIC respectivement sous les noms MONTANOX™ 80, SIMULSOL™ OL 50 et MONTANOX™ 20, l'alcool laurique éthoxylé à 7 moles d'oxyde d'éthylène commercialisé par la société SEPPIC sous le nom SIMULSOL™ P7 ou les nonylphénol éthoxylés. Lorsqu'il s'agit d'un mélange d'agents émulsifiants du type huile dans eau, la valeur HLB à prendre en considération est celle dudit mélange. Dans le contexte de la présente invention, lorsque la composition telle que définie ci-dessus, comprend un mélange d'agents émulsifiant de type (H/E), au moins 50% de ce mélange est constitué de composés de formule (I) telle que définie précédemment.

L'invention a plus particulièrement pour objet une composition telle que définie précédemment, caractérisée en ce que le polyélectrolyte est réticulé et/ou branché par un agent de réticulation et/ou un agent ramification choisi parmi les composés diéthyléniques ou polyéthyléniques, et tout particulièrement choisi parmi l'acide diallyloxyacétique ou un des sels et notamment son sel de sodium, le triallylamine, le triméthylol propanetriacrylate, le diméthacrylate d'éthylèneglycol, le diacrylate de diéthylène glycol, le diallylurée ou le méthylène bis(acrylamide) et caractérisée en ce que l'agent de réticulation et/ou de ramification est dans la proportion molaire exprimée par rapport aux monomères mis en oeuvre, de 0,005% à 1%, notamment de 0,01% à 0,2% et plus particulièrement de 0,01% à 0,2%.

Le polyélectrolyte contenu dans la composition objet de la présente invention est généralement ou bien un homopolymère à base d'un monomère possédant une fonction acide fort partiellement ou totalement salifiée ou bien un homopolymère à base d'un monomère possédant une fonction acide faible partiellement ou totalement salifiée ou bien un homopolymère à base d'un monomère cationique ou bien un copolymère à base d'au moins un monomère possédant une fonction acide fort partiellement ou totalement salifiée, copolymérisé, soit avec au moins un monomère possédant une fonction acide faible partiellement ou totalement salifiée, soit avec au moins un monomère neutre ou bien un copolymère à base d'un monomère cationique, copolymérisé, avec au moins un monomère neutre ou bien un copolymère à base d'au moins un monomère possédant une fonction acide faible partiellement ou totalement salifiée, copolymérisé soit avec au moins un monomère possédant une fonction acide faible partiellement ou totalement salifiée soit avec au moins un monomère neutre. Lorsque le polyélectrolyte est à base d'un monomère comportant une fonction acide fort, il s'agit notamment de la fonction acide sulfonique ou de la fonction acide phosphonique, lesdites fonctions étant partiellement ou totalement salifiées ; le monomère à fonction acide fort est plus particulièrement l'acide 2-méthyl 2-[(1-oxo 2-propènyl) amino] 1-propane-sulfonique, partiellement ou totalement salifié, sous forme, de sel de métal alcalin, tel que le sel de sodium ou le sel de potassium, de sel d'ammonium (NH₄⁺) ou de sel d'aminoalcool tel que le sel de monoéthanolamine (HOCH₂CH₂NH₃⁺). Lorsque le polyélectrolyte est à base d'un monomère comportant une fonction acide faible, ledit monomère est notamment choisi parmi l'acide acrylique, l'acide méthacrylique, l'acide itaconique ou l'acide maléique partiellement ou totalement salifié sous forme, de sel de métal alcalin, tel que le sel de sodium ou le sel de potassium, de sel d'ammonium (NH₄⁺) ou de sel d'aminoalcool tel que le sel de monoéthanolamine (HOCH₂CH₂NH₃⁺). Lorsque le polyélectrolyte est à base d'un monomère neutre, ledit monomère est choisi parmi l'acrylamide, le méthacylamide, le vinyl pyrrolidone, l'acrylate de (2-hydroxy éthyle), l'acrylate de (2,3-dihydroxy propyle), le méthacrylate de (2-hydroxy éthyle) ou le méthacrylate de (2,3-dihydroxy propyle) ou un dérivé éthoxylé de poids moléculaire compris entre 400 et 1000, de chacun de ces esters hydroxylés décrits ci-dessus.

L'invention a plus particulièrement pour objet une composition telle que définie précédemment, dans laquelle le polyélectrolyte est soit un homopolymère de l'acide 2-méthyl 2-[(1-oxo 2-propènyl) amino] 1-propanesulfonique (AMPS) partiellement ou totalement salifié sous forme de sel de sodium, de sel d'ammonium ou de sel de monoéthanolamine, soit un homopolymère de l'acide acrylique partiellement ou totalement salifié sous forme de sel de sodium, de sel d'ammonium ou de sel de monoéthanolamine, soit un copolymère comportant en proportion molaire de 30% à 50% d'acide 2-méthyl 2-[(1-oxo 2-propènyl) amino] 1-propanesulfonique partiellement ou totalement salifié sous forme de sel de sodium, de sel d'ammonium ou de sel de monoéthanolamine et de 50% à 70% d'acrylamide, soit un copolymère comportant en proportion molaire de 60% à 90% d'acide 2-méthyl 2-[(1-oxo 2-propènyl) amino] 1-propanesulfonique partiellement ou totalement salifié sous forme de sel de sodium, de sel d'ammonium ou de sel de monoéthanolamine et de 10% à 40% d'acrylate de (2-hydroxy éthyle) ou soit un copolymère comportant en proportion molaire de 30% à 90% et plus particulièrement de 30 à 45% d'acide 2-méthyl 2-[(1-oxo 2-propènyl) amino] 1-propanesulfonique partiellement ou totalement salifié sous forme de sel de sodium, de sel d'ammonium ou de sel de monoéthanolamine et d'acide acrylique partiellement ou totalement salifié sous forme de sel de sodium, de sel d'ammonium, ou de sel de monoéthanolamine.

La composition objet de la présente invention contient généralement de 2,5% à 15% en poids, et de préférence de 4% à 9% en poids, d'agents émulsifiants, parmi lesquels de 20% à 50%, notamment de 25% à 40% du poids total des agents émulsifiants présents sont du type eau dans huile (E/H) et dans laquelle de 80% à 50%, notamment de 75% à 60%, du poids total des agents émulsifiants, sont du type huile dans eau (H/E).

La phase huile de la composition objet de la présente invention représente généralement de 15% à 50% et de préférence de 20% à 25%, de son poids total. Cette phase huile est constituée soit par une huile minérale commerciale contenant des hydrocarbures saturés de type paraffine, isoparaffine, cycloparaffine, présentant à température ambiante, une densité entre 0.7 et 0.9 et un point d'ébullition supérieur à 180°C, telle que par exemple l'ISOPAR™ M, l'ISOPAR™ L, l'EXXOL™ D 100 S commercialisé par EXXON ou une huile blanche minérale telle que le MARCOL™ 52 également commercialisée par EXXON, l'isohexadécane commercialisé par BAYER ou l'isododécane, soit par une huile végétale, soit une huile de synthèse, soit par un mélange de plusieurs de ces huiles ; on peut aussi citer l'isostéarate d'isostéaryle seul ou en mélange avec d'autres huiles. L'isohexadécane, qui est identifié dans Chemical Abstracts par le numéro RN = 93685-80-4, est un mélange d'isoparaffines en C₁₂, C₁₆ et C₂₀ contenant au moins 97% d'isoparaffines en C₁₆, parmi lesquelles le constituant principal est le 2,2,4,4,6,8,8-heptaméthyl nonane (RN = 4390-04-9). Il est commercialisé en France par la société Bayer. Le MARCOL™ 52 est une huile commerciale répondant à la définition des huiles de vaseline dans le Codex français. C'est une huile blanche minérale conforme aux règles FDA 21 CFR 178.878 et CFR 178.3620(a) ; elle est inscrite à la Pharmacopée des USA, US XXIII (1995) et à la Pharmacopée européenne (1993). Selon un aspect particulier, la composition, telle que définie précédemment, est caractérisée en ce que la phase huile consiste en de l'isohexadécane ou en une huile blanche minérale.

Le latex auto-inversible, tels que définis précédemment, contiennent entre 5% et 60% en poids, d'eau et plus particulièrement entre 20 % et 50 % en poids, d'eau. Il peut également contenir divers additifs tels que des agents complexants, des agents de transfert ou des agents limiteurs de chaîne.

Le domaine d'utilisation d'un latex inverse auto-inversible dépend notamment de la structure chimique et des propriétés du polymère constitutif dudit latex. Par exemple, lorsque ce polymère est un floculant ou un coagulant, le latex peut est utilisé dans le traitement des eaux ; lorsque le polymère est un agent de rétention des charges ou des fibres, il peut être utilisé dans l'industrie papetière ; lorsque le polymère est épaississant il peut, être utilisé dans l'industrie textile. On peut aussi citer d'autres applications telles que dans l'industrie pétrolière ou dans les métiers du nettoyage ou de la détergence. L'un des avantages des latex inverses auto-inversibles, est que, se présentant sous forme liquide, ils permettent la manipulation aisée de polymères de très haute masse moléculaire. La mise en solution de ces latex est extrêmement rapide.

Les exemples suivants illustrent la présente invention sans toutefois la limiter.

### Exemple comparatif (a)

### Mode opératoire

On charge dans un bécher sous agitation :
- 200 g d'eau permutée,
- 73,1 g d'acide acrylique glacial,
- 112,1 g d'une solution aqueuse d'hydroxyde de sodium à 48% en poids,
- 278,4 g d'acide 2-méthyl -[(1-oxo 2-propényl) amino] 1-propanesulfonique
- 0,45 g d'une solution commerciale à 40% en poids de diéthylènetriamine pentaacétate de sodium,
- 0,182 g d'une solution commerciale à 50% de méthylène bis(acrylamide)
Le pH de la phase aqueuse est ajusté à 3,5 et la solution est complétée avec de l'eau permutée jusqu'à 682 g.
Parallèlement, on prépare une phase organique en introduisant dans un bécher successivement et sous agitation :
- 220 g d'isohexadécane,
- 25 g de MONTANE™ 80 VG (oléate de sorbitan commercialisé par la société SEPPIC),
- 0,2g d'azo bis(isobutyronitrile) (AIBN).

La phase aqueuse est introduite progressivement dans la phase organique puis soumise à une agitation mécanique violente de type ULTRA TURRAX™, commercialisé par IKA. L'émulsion obtenue est alors transférée dans un réacteur de polymérisation, est soumise à un barbotage d'azote important, pour éliminer l'oxygène, puis est refroidie à 5-6°C. On introduit alors 5 ml d'une solution d'isohexadécane contenant 0,42% en poids d'hydroperoxyde de cumène. Après le temps suffisant pour une bonne homogénéisation de la solution, on introduit une solution aqueuse de métabisulfite de sodium (0,2 g / 100 ml d'eau) à raison de 0,5ml /minute en laissant monter la température jusqu'à stabilisation de cette dernière. Le milieu réactionnel est maintenu à cette température pendant 90 minutes, puis L'ensemble est refroidi jusqu'environ 35°C et on ajoute enfin 50g de MONTANOX™80, pour obtenir l'émulsion désirée.

### Evaluation des propriétés du latex obtenu

Viscosité à 25°C du latex à 3% dans l'eau (Brookfield RVT, Mobile 6, vitesse 5) η = 78 000 mPas ;
Viscosité à 25°C du latex à 3% dans l'eau + 0,1% NaCI (Brookfield RVT, Mobile 6, vitesse 5) : η = 20000 mPas ;

### Exemple comparatif (b)

### Mode opératoire

On charge dans un bécher sous agitation :
- 220 g d'eau permutée,
- 138,1 g d'une solution aqueuse d'hydroxyde de sodium à 48% en poids,
- 343,5 g d'acide 2-méthyl -[(1-oxo 2-propényl) amino] 1-propanesulfonique,
- 0,45 g d'une solution commerciale à 40% en poids de diéthylènetriamine pentaacétate de sodium, et
- 0,22 g de méthylène bis(acrylamide).
Le pH de la phase aqueuse est ajusté à 3,5 et la solution est complétée avec de l'eau permutée jusqu'à 707 g.
Parallèlement, on prépare une phase organique en introduisant dans un bécher successivement et sous agitation :
- 220 g d'isohexadécane,
- 22 g de MONTANE™ 80 VG,
- 0,2g d'azo bis(isobutyronitrile) (AIBN).
La phase aqueuse est introduite progressivement dans la phase organique puis soumise à une agitation mécanique violente de type ULTRA TURRAX™, commercialisé par IKA. L'émulsion obtenue est alors transférée dans un réacteur de polymérisation, est soumise à un barbotage d'azote important, pour éliminer l'oxygène, puis est refroidie à 5-6°C. On introduit alors 5ml d'une solution d'isohexadécane contenant 0,42% en poids d'hydroperoxyde de cumène. Après le temps suffisant pour une bonne homogénéisation de la solution, on introduit, pendant 60 minutes, une solution aqueuse de métabisulfite de sodium (0,4g / 100 ml d'eau) à raison de 0,5ml / minute en laissant monter la température jusqu'à la température de polymérisation. Le milieu réactionnel est maintenu à cette température pendant 90 minutes, puis L'ensemble est refroidi jusqu'environ 35°C et on ajoute enfin 30g de MONTANOX™80, pour obtenir l'émulsion désirée.

### Evaluation des propriétés du latex obtenu

Viscosité à 25°C du latex à 3% dans l'eau (Brookfield RVT, Mobile 6, vitesse 5) : η = 93800 mPas ;
Viscosité à 25°C du latex à 3% dans l'eau + 0,1% NaCI (Brookfield RVT, Mobile 6, vitesse 5) : η = 20200 mPas ;

### Exemple comparatif (c)

### Mode opératoire

- 250 g d'eau permutée,
- 250 g d'acide acrylique glacial,
- 170 g environ d'une solution d'ammoniaque à 30% en poids, de façon à ramener le pH à 5,5,
- 0,45 g d'une solution commerciale à 40% en poids de diéthylènetriamine pentaacétate de sodium,
- 2,31 g d'une solution commerciale à 50% de diallyloxyacétate de sodium,
et la solution est complétée avec de l'eau permutée jusqu'à 682 g.
Parallèlement, on prépare une phase organique en introduisant dans un bécher successivement et sous agitation :
- 220 g d'isohexadécane,
- 30 g de MONTANE™ 80 VG,
- 0,2g d'azo bis(isobutyronitrile) (AIBN).
La phase aqueuse est introduite progressivement dans la phase organique puis soumise à une agitation mécanique violente de type ULTRA TURRAX™, commercialisé par IKA. L'émulsion obtenue est alors transférée dans un réacteur de polymérisation, est soumise à un barbotage d'azote important, pour éliminer l'oxygène, puis est refroidie à 5-6°C. On introduit alors 0,16 g de peroxydisulfate de sodium dilué dans 20g d'eau. Après le temps suffisant pour une bonne homogénéisation de la solution, on introduit, pendant 60 minutes, une solution aqueuse de métabisulfite de sodium (0,2 g / 100 ml d'eau) à raison de 0,5ml /minute en laissant monter la température jusqu'à la température de polymérisation. Le milieu réactionnel est maintenu à cette température pendant 90 minutes, puis L'ensemble est refroidi jusque environ 35°C et on ajoute enfin 50g de SIMULSOL™ OL50 pour obtenir l'émulsion désirée.

### Evaluation des propriétés du latex obtenu

Viscosité à 25°C du latex à 3% dans l'eau (Brookfield RVT, Mobile 6, vitesse 5) : η = 93000 mPas ;
Viscosité à 25°C du latex à 3% dans l'eau + 0,1% NaCI (Brookfield RVT, Mobile 6, vitesse 5) : η = 20200 mPas ;

### Exemple comparatif (d)

### Mode opératoire

On charge dans un bécher sous agitation :
- 250 g d'eau permutée,
- 250 g d'acide acrylique glacial,
- 149,6 g de monoéthanolamine, de manière à amener le pH de la solution à 5,5,
- 0,45 g d'une solution commerciale à 40% de diéthylènetriamine pentaacétate de sodium,
- 3, 4 g d'une solution commerciale à 50% de diallyloxyacétate de sodium
- on complète avec de l'eau permutée jusqu'à 682 g
Parallèlement, on prépare une phase organique en introduisant dans un bécher successivement et sous agitation ::
- 220g d'isohexadécane,
- 30g de MONTANE™ 80 VG (oléate de sorbitan commercialisé par la société SEPPIC),
- 0,2g d'AIBN.
La phase aqueuse est introduite progressivement dans la phase organique puis soumise à une agitation mécanique violente de type ULTRA TURRAX™, commercialisé par IKA. L'émulsion obtenue est alors transférée dans un réacteur de polymérisation, est soumise à un barbotage d'azote important, pour éliminer l'oxygène, puis est refroidie à 5-6°C. On introduit alors 0,039 g de d'hydro peroxyde de cumène en solution dans de l'isohexadécane. Après le temps suffisant pour une bonne homogénéisation de la solution, on introduit, pendant 60 minutes, une solution aqueuse de métabisulfite de sodium (0,4 g / 100 ml d'eau) à raison de 0,5ml /minute en laissant monter la température jusqu'à la température de polymérisation. Le milieu réactionnel est maintenu à cette température pendant 90 minutes, puis L'ensemble est refroidi jusqu'environ 35°C et on ajoute enfin 50g de SIMULSOL™ OL 50, pour obtenir l'émulsion désirée.

### Evaluation des propriétés du latex obtenu

Viscosité à 25°C du latex à 3% dans l'eau (Brookfield RVT, Mobile 6, vitesse 5) : η = 114000 mPas ;
Viscosité à 25°C du latex à 3% dans l'eau + 0,1% NaCI (Brookfield RVT, Mobile 6, vitesse 5) : η = 35000 mPas ;

### Exemple 1 : Latex selon l'invention à base de copolymère AMPS/acide acrylique (salifié sous forme de sel de sodium)

En procédant comme à l'exemple comparatif (a), mais en introduisant 54, 6g de SIMULSOL™ SL 10, au lieu du MONTANOX™80, on obtient un latex ayant des propriétés viscosimétriques suivantes :
Viscosité à 25°C du latex à 3% dans l'eau (Brookfield RVT, Mobile 6, vitesse 5) : η = 77 800 mPas ;
Viscosité à 25°C du latex à 3% dans l'eau + 0,1% NaCI (Brookfield RVT, Mobile 6, vitesse 5) : η = 30 000 mPas ;

### Exemple 2 : Latex selon l'invention à base d'homopolymère d'AMPS (salifié sous forme de sel de sodium)

En procédant comme à l'exemple comparatif (b), mais en introduisant 54,6 g de SIMULSOL™ SL 10, au lieu du MONTANOX™80, on obtient un latex ayant des propriétés viscosimétriques suivantes :
Viscosité à 25°C du latex à 3% dans l'eau (Brookfield RVT, Mobile 6, vitesse 5) : η = 92400 mPas ;
Viscosité à 25°C du latex à 3% dans l'eau + 0,1% NaCI (Brookfield RVT, Mobile 6, vitesse 5) : η = 30000 mPas ;

### Exemple 3 : Latex selon l'invention à base d'homopolymère d'acide acrylique (salifié sous forme de sel d'ammonium)

En procédant comme à l'exemple comparatif (c), mais en introduisant 50g de SIMULSOL™ SL 10, au lieu du SIMULSOL™ OL50, on obtient un latex ayant des propriétés viscosimétriques suivantes :
Viscosité à 25°C du latex à 3% dans l'eau (Brookfield RVT, Mobile 6, vitesse 5) : η = 93 000 mPas ;
Viscosité à 25°C du latex à 3% dans l'eau + 0,1% NaCI (Brookfield RVT, Mobile 6, vitesse 5) : η = 30 000 mPas ;

### Exemple 4 : Latex selon l'invention à base d'homopolymère d'acide acrylique (salifié sous forme de sel de N-[2-hydroxy éthyl)ammonium]

En procédant comme à l'exemple comparatif (d), mais en introduisant 54,6 g de SIMULSOL™ SL10, au lieu du SIMULSOL™ OL 50, on obtient un latex ayant Les propriétés viscosimétriques suivantes :
Viscosité à 25°C du latex à 3% dans l'eau (Brookfield RVT, Mobile 6, vitesse 5) : η = 106400 mPas ;
Viscosité à 25°C du latex à 3% dans l'eau + 0,1% NaCI (Brookfield RVT, Mobile 6, vitesse 5) : η = 45800 mPas ;

### Exemple 5 : Latex selon l'invention à base d'homopolymère d'acide acrylique (salifié sous forme de sel de N-[2-hydroxy éthyl)ammonium]

En procédant comme à l'exemple comparatif (d), mais en introduisant 75,2g de SIMULSOL™ SL 26, au lieu du SIMULSOL™ OL 50, on obtient un latex ayant Les propriétés viscosimétriques suivantes :
Viscosité à 25°C du latex à 3% dans l'eau (Brookfield RVT, Mobile 6, vitesse 5) : η = 82000 mPas ;
Viscosité à 25°C du latex à 3% dans l'eau + 0,1% NaCI (Brookfield RVT, Mobile 6, vitesse 5) : η = 45200 mPas ;

### Exemple 6 : Latex selon l'invention à base de copolymère d'acrylate de diméthylaminoéthyl quaternisé, acrylamide.

### Mode opératoire

On charge dans un bécher sous agitation :
- 450 g d'acrylamide à 50% dans l'eau,
- 200 g d'acrylate de diméthylaminoéthyl quaternisé au chlorure de méthyle à 80% dans l'eau, commercialisé sous le nom ADAMQUAT™ MC 80.

Le pH de la phase aqueuse est ajusté à 3,5 et la solution est complétée avec de l'eau permutée jusqu'à 680 g.
Parallèlement, on prépare une phase organique en introduisant dans un bécher successivement et sous agitation :
- 220 g d'ISOPAR™ M,
- 25 g de MONTANE™ 80 VG (oléate de sorbitan commercialisé par la société SEPPIC),
- 0,25 g d'azo bis(isobutyronitrile) (AIBN).
La phase aqueuse est introduite progressivement dans la phase organique puis soumise à une agitation mécanique violente de type ULTRA TURRAX™, commercialisé par IKA. L'émulsion obtenue est alors transférée dans un réacteur de polymérisation, est soumise à un barbotage d'azote important, pour éliminer l'oxygène, puis est refroidie à 5-6°C. On introduit alors 5 ml d'une solution d'ISOPAR™ M contenant 0,42% en poids d'hydroperoxyde de cumène. Après le temps suffisant pour une bonne homogénéisation de la solution, on introduit, pendant 60 minutes, une solution aqueuse de métabisulfite de sodium (0,2 g / 100 ml d'eau) à raison de 0,5ml /minute en laissant monter la température jusqu'à la température de polymérisation. Le milieu réactionnel est maintenu à cette température pendant 90 minutes, puis L'ensemble est refroidi jusqu'environ 35°C et on ajoute enfin 55g de SIMULSOL™ SL 10, pour obtenir un latex inverse de polyacrylamide cationique de très haut poids moléculaire (PM > 10 000 000). La dissolution dans l'eau de cette composition est rapide et complète ; elle est stable en décantation et peut être utilisée comme floculant dans le traitement des eaux urbaines ou la déshydratation des boues.

### Exemple 7 : Latex selon l'invention à base de copolymère d'acrylate de sodium, et d'acrylamide.

### Mode opératoire

On charge dans un bécher sous agitation :
- 360 g d'acrylamide à 50% dans l'eau,
- 80 g d'acide acrylique glacial,
- 80 g d'une solution aqueuse d'hydroxyde de sodium à 50% en poids, et
- 0,45 g d'une solution commerciale à 40% de diéthylènetriamine pentaacétate de sodium,
on complète avec 680 g d'eau permutée puis on procède comme à l'exemple précédent et on obtient un latex inverse de très haut poids moléculaire (PM > 10 000 000). La dissolution dans l'eau de cette composition est rapide et complète ; elle est stable en décantation et peut être utilisée comme floculant anionique dans le traitement des eaux urbaines.

### Exemple 8 : Latex selon l'invention à base de copolymère d'acrtylate d'ammonium et d'acrylamide.

### Mode opératoire

On charge dans un bécher sous agitation :
- 13 g d'acrylamide à
- 300 g d'eau,
- 225 g d'acide acrylique glacial,
- de l'ammoniaque de façon à amener le taux de neutralisation de l'acide à 60%,
   0,08 g de méthylène bis(acrylamide)
- 0,5 g d'une solution commerciale à 40% de diéthylènetriamine pentaacétate de sodium,
on complète avec 680 g d'eau permutée puis on procède comme à l'exemple précédent et on obtient un latex inverse que l'on peut utiliser comme agent épaississant des pâtes d'impression pigmentaire.

### Analyse des résultats

Les viscosités, mesurées à25 °C (Brookfield RVT, Mobile 6, vitesse 5 ; en mPas), sont consignées dans le tableau suivant ; la comparaison, entre les pertes de viscosité constatées [(η₁ - η) / η = Δη/η], pour les latex des exemples comparatifs a à d, et celles constatées pour les latex des exemples 1 à 5, permet de démontrer que l'amélioration de la tenue au sel des latex selon l'invention, est inhérente à la présence d'alkyl polyglycosides de formule (I).

| Exemple N° | Viscosité η du latex à 3% dans l'eau | Viscosité η₁ du latex à 3% dans l'eau + 0,1% NaCI | Δη/η |
|---|---|---|---|
| a | 78 000 | 20 000 | -74,36% |
| 1 | 77 800 | 30 000 | -61,44% |
| b | 93 800 | 20 200 | -78,50% |
| 2 | 92 400 | 30 000 | -67,53% |
| c | 93 000 | 20 200 | -78,28% |
| 3 | 93 000 | 30 000 | -67,74% |
| d | 114 000 | 35 000 | -69,30% |
| 4 | 106 400 | 45 800 | -56,95% |
| 5 | 82 000 | 45 200 | -44,89% |

## Revendications

1. Utilisation d'un composé de formule (l) :
R₁-O-[CH(R₂)-CH₂-O]ₙ-(G)ₓ-H (I)
dans laquelle R₁ représente un radical hydrocarboné linéaire ou ramifié, saturé ou insaturé, comprenant de 1 à 30 atomes de carbones, R₂ représente un atome d'hydrogène ou radical alkyle comprenant 1 ou 2 atomes de carbone, G représente le reste d'un saccharide, x représente un nombre décimal compris entre 1 et 5, et n est égal, soit à zéro, soit à un nombre entier compris entre 1 et 30, ou d'un mélange desdits composés, pour inverser une émulsion eau dans huile (E/H), comprenant au moins un polymère hydrosoluble, linéaire, branché ou réticulé, en une émulsion huile dans eau (H/E).

2. Utilisation d'un composé de formule (I) ou d'un mélange de composés de formule (I), telle que définie à la revendication 1, pour laquelle R₁ représente un radical alkyle ou un radical alkènyle et, plus particulièrement, un radical choisi parmi les radicaux hexyle, heptyle, octyle, nonyle, décyle, undécyle, undécènyle, dodécyle, tridécyle, tetradécyle, pentadécyle, hexadécyle, heptadécyle, octadécyle, octadécènyle, octadécatriènyle, octadécadiènyle, eicosanyle ou béhènyle. lesdits radicaux étant linéaires ou ramifiés.

3. Utilisation d'un composé de formule (I) ou d'un mélange de composés de formule (I), telle que définie l'une des revendications 1 ou 2, pour laquelle R₁ représente un radical choisi parmi les radicaux comportant de 8 à 18 atomes de carbone.

4. Utilisation d'un composé de formule (I) ou d'un mélange de composés de formule (I), telle que définie à l'une des revendications 1 à 3, pour laquelle G représente le reste du glucose et pour laquelle x, est compris entre 1 et 3, notamment entre 1,05 et 2,5 et tout particulièrement entre 1,1 et 2,0.

5. Utilisation d'un composé de formule (I) ou d'un mélange de composés de formule (I), telle que définie à l'une des revendications 1 à 4, pour inverser une émulsion eau dans huile (E/H) comprenant au moins un polymère linéaire, branché ou réticulé choisi ou bien parmi les homopolymères à base d'un monomère possédant une fonction acide fort partiellement ou totalement salifiée ou bien parmi les homopolymères à base d'un monomère possédant une fonction acide faible partiellement ou totalement salifiée ou bien parmi les homopolymères à base d'un monomère cationique ou bien parmi les copolymères à base d'au moins un monomère possédant une fonction acide fort partiellement ou totalement salifiée, copolymérisé, soit avec au moins un monomère possédant une fonction acide faible partiellement ou totalement salifiée, soit avec au moins un monomère neutre ou bien parmi les copolymères à base d'un monomère cationique, copolymérisé, avec au moins un monomère neutre ou bien parmi les copolymères à base d'au moins un monomère possédant une fonction acide faible partiellement ou totalement salifiée, copolymérisé, soit avec au moins un monomère possédant une fonction acide faible partiellement ou totalement salifiée, soit avec au moins un monomère neutre, en une émulsion huile dans eau (H/E).

6. Procédé de préparation d'une émulsion huile dans eau (H/E) comprenant au moins un polymère hydrosoluble, linéaire, branché ou réticulé, comprenant les étapes suivantes :
a) une étape de mélange d'une solution aqueuse, avec au moins un alkylpolyglycoside de formule (I), telle que définie à l'une des revendications 1 à 4,
b) une étape de mélange de la solution résultante de l'étape a), avec une émulsion eau dans huile (E/H) comprenant ledit polymère.

7. Procédé tel que défini à la revendication 6, dans lequel l'émulsion eau dans huile (E/H) mise en oeuvre à l'étape b), comprend un polymère linéaire, branché ou réticulé, choisi ou bien parmi les homopolymères à base d'un monomère possédant une fonction acide fort partiellement ou totalement salifiée ou bien parmi les homopolymères à base d'un monomère possédant une fonction acide faible partiellement ou totalement salifiée ou bien parmi les homopolymères à base d'un monomère cationique ou bien parmi les copolymères à base d'au moins un monomère possédant une fonction acide fort partiellement ou totalement salifiée, copolymérisé, soit avec au moins un monomère possédant une fonction acide faible partiellement ou totalement salifiée, soit avec au moins un monomère neutre ou bien parmi les copolymères à base d'un monomère cationique, copolymérisé, avec au moins un monomère neutre ou bien parmi les copolymères à base d'au moins un monomère possédant une fonction acide faible partiellement ou totalement salifiée, copolymérisé, soit avec au moins un monomère possédant une fonction acide faible partiellement ou totalement salifiée, soit avec au moins un monomère neutre.

8. Procédé de préparation d'une émulsion huile dans eau (H/E), comprenant au moins un polymère hydrosoluble, linéaire, branché, comprenant les étapes suivantes :
a) l'on émulsionne une solution aqueuse comprenant au moins un monomère dans une phase huile en présence d'un ou plusieurs agents émulsifiants de type eau dans huile (E/H),
b) l'on amorce la réaction de polymérisation par introduction dans l'émulsion formée en a), d'un initiateur de radicaux libres et d'éventuellement un co-initiateur puis on la laisse se dérouler,
c) lorsque la réaction de polymérisation est terminée, l'on introduit un ou plusieurs agents émulsifiants de type huile dans eau (H/E), dont l'un au moins est un composé de formule (I) telle que définie à l'une des revendications 1 à 4, à une température inférieure à 50°C, et
d) on mélange le latex inverse auto-inversible obtenu à l'étape c) avec la solution aqueuse dont on souhaite modifier les propriétés rhéologiques.

9. Procédé tel que défini à la revendication 8, dans lequel le milieu réactionnel issu de l'étape b), est concentré par distillation, avant la mise en oeuvre de l'étape c).

10. Procédé tel que défini à l'une des revendications 8 ou 9, dans lequel, la réaction de polymérisation est amorcée par un couple oxydoréducteur générateur d'ions hydrogénosulfite (HSO₃⁻), tel que le couple hydroperoxyde de cumène-métabisulfite de sodium (Na₂S₂O₅) ou le couple hydroperoxyde de cumène-chlorure de thionyle (SOCI₂) à une température inférieure ou égale à 10°C, si désiré accompagné d'un agent co-initiateur de polymérisation tel que par exemple l'azo-bis(isobutyronitrile) puis conduite jusqu'à une température supérieure ou égale à 50°C

11. Composition comprenant une phase huile, une phase aqueuse, au moins un agent émulsifiant de type eau dans huile (E/H), au moins un agent émulsifiant de type huile dans eau (H/E), sous forme d'un latex inverse auto-inversible comprenant de 20% à 70% en poids, et de préférence de 25% à 40% en poids, d'un polyélectrolyte linéaire, branché ou réticulé, caractérisé en ce que l'un au moins des agents émulsifiants de type huile dans eau est un composé de formule (I), telle que définie à l'une des revendications 1 à 4.

12. Composition telle que définie à la revendication 11, dans laquelle l'agent émulsifiant du type eau dans huile, est choisi parmi les esters de sorbitan, comme le monooléate de sorbitan ou l'isostéarate de sorbitan.

13. Composition telle que définie à l'une des revendications 11 ou 12, caractérisée en ce que le polyélectrolyte est réticulé et/ou branché par un agent de réticulation et/ou un agent ramification choisi parmi les composés diéthyléniques ou polyéthyléniques, et tout particulièrement choisi parmi l'acide diallyloxyacétique ou un des sels et notamment son sel de sodium, le triallylamine, le triméthylol propanetriacrylate, le diméthacrylate d'éthylèneglycol, le diacrylate de diéthylène glycol, le diallylurée ou le méthylène bis(acrylamide) et en ce que l'agent de réticulation et/ou de ramification est dans la proportion molaire exprimée par rapport aux monomères mis en oeuvre, de 0,005% à 1%, notamment de 0,01% à 0,2% et plus particulièrement de 0,01% à 0,2%.

14. Composition telle que définie à l'une quelconque des revendications 11 à 13, caractérisée en ce que ledit polyélectrolyte est ou bien un homopolymère à base d'un monomère possédant une fonction acide fort partiellement ou totalement salifiée ou bien un homopolymère à base d'un monomère possédant une fonction acide faible partiellement ou totalement salifiée ou bien un homopolymère à base d'un monomère cationique ou bien un copolymère à base d'au moins un monomère possédant une fonction acide fort partiellement ou totalement salifiée, copolymérisé, soit avec au moins un monomère possédant une fonction acide faible partiellement ou totalement salifiée, soit avec au moins un monomère neutre ou bien un copolymère à base d'un monomère cationique, copolymérisé, avec au moins un monomère neutre ou bien un copolymère à base d'au moins un monomère possédant une fonction acide faible partiellement ou totalement salifiée, copolymérisé, soit au moins un monomère possédant une fonction acide faible partiellement ou totalement salifiée, soit avec au moins un monomère neutre.

15. Composition telle que définie à la revendication 14, caractérisée en ce que, lorsque le polyélectrolyte est à base d'un monomère comportant une fonction acide fort, il s'agit de la fonction acide sulfonique ou de la fonction acide phosphonique, lesdites fonctions étant partiellement ou totalement salifiées et le monomère à fonction acide fort est plus particulièrement l'acide 2-méthyl 2-[(1-oxo 2-propènyl) amino] 1-propane-sulfonique, partiellement ou totalement salifié, sous forme, de sel de métal alcalin, tel que le sel de sodium ou le sel de potassium, de sel d'ammonium (NH₄⁺) ou de sel d'aminoalcool tel que le sel de monoéthanolamine (HOCH₂CH₂NH₃⁺)

16. Composition telle que définie à la revendication 14, caractérisée en ce que, lorsque le polyélectrolyte est à base d'un monomère comportant une fonction acide faible, ledit monomère est choisi parmi l'acide acrylique, l'acide méthacrylique, l'acide itaconique ou l'acide maléique partiellement ou totalement salifié sous forme, de sel de métal alcalin, tel que le sel de sodium ou le sel de potassium, de sel d'ammonium (NH₄⁺) ou de sel d'aminoalcool tel que le sel de monoéthanolamine (HOCH₂CH₂NH₃⁺)

17. Composition telle que définie à la revendication 14, caractérisée en ce que, lorsque le polyélectrolyte est à base d'un monomère neutre, ledit monomère est choisi parmi l'acrylamide, le méthacrylamide, le vinyl pyrrolidone, l'acrylate de (2-hydroxy éthyle), l'acrylate de (2,3-dihydroxy propyle), le méthacrylate de (2-hydroxy éthyle) ou le méthacrylate de (2,3-dihydroxy propyle) ou un dérivé éthoxylé de poids moléculaire compris entre 400 et 1000, de chacun de ces esters hydroxylés décrits ci-dessus.

18. Composition telle que définie à l'une des revendications 11 à 17, dans laquelle le polyélectrolyte est soit un homopolymère de l'acide 2-méthyl 2-[(1-oxo 2-propènyl) amino] 1-propanesulfonique (AMPS) partiellement ou totalement salifié sous forme de sel de sodium, de sel d'ammonium ou de sel de monoéthanolamine, soit un homopolymère de l'acide acrylique partiellement ou totalement salifié sous forme de sel de sodium, de sel d'ammonium ou de sel de monoéthanolamine, soit un copolymère comportant en proportion molaire de 30% à 50% d'acide 2-méthyl 2-[(1-oxo 2-propènyl) amino] 1-propanesulfonique partiellement ou totalement salifié sous forme de sel de sodium, de sel d'ammonium ou de sel de monoéthanolamine et de 50% à 70% d'acrylamide, soit un copolymère comportant en proportion molaire de 60% à 90% d'acide 2-méthyl 2-[(1-oxo 2-propènyl) amino] 1-propanesulfonique partiellement ou totalement salifié sous forme de sel de sodium, de sel d'ammonium ou de sel de monoéthanolamine et de 10% à 40% d'acrylate de (2-hydroxy éthyle) ou soit un copolymère comportant en proportion molaire de 30% à 90% et plus particulièrement de 30 à 45% d'acide 2-méthyl 2-[(1-oxo 2-propènyl) amino] 1-propanesulfonique partiellement ou totalement salifié sous forme de sel de sodium, de sel d'ammonium, ou de sel de monoéthanolamine et d'acide acrylique partiellement ou totalement salifié sous forme de sel de sodium, de sel d'ammonium ou de sel de monoéthanolamine.

19. Composition telle que définie à l'une quelconque des revendications 11 à 18, caractérisée en ce qu'elle contient de 2,5% à 15% en poids, et de préférence de 4% à 9% en poids, d'agents émulsifiants, parmi lesquels de 20% à 50%, notamment de 25% à 40% du poids total des agents émulsifiants présents sont du type eau dans huile (E/H) et dans laquelle de 80% à 50%, notamment de 75% à 60%, du poids total des agents émulsifiants, sont du type huile dans eau (H/E).

20. Composition telle que définie à l'une quelconque des revendications 11 à 19, caractérisée en ce que la phase huile représente de 15% à 50%, de préférence de 20% à 25%, de son poids total.

21. Composition telle que définie à l'une quelconque des revendications 11 à 20, dans laquelle la phase huile consiste en de l'isohexadécane ou en une huile blanche minérale.

22. Composition telle que définie à l'une quelconque des revendications 11 à 21, caractérisée en ce qu'elle contient de 5% à 60% en poids, et plus particulièrement de 20% à 50% en poids d'eau.

23. Composition telle que définie à l'une quelconque des revendications 11 à 22, caractérisée en ce qu'elle contient en outre un ou plusieurs additifs choisis notamment parmi les agents complexant, des agents de transfert ou des agents limiteurs de chaîne.

24. Utilisation de la composition telle que définie à l'une des revendications 11 à 23, comme agent floculant, comme agent coagulant, comme agent de rétention des charges ou des fibres, comme agent épaississant ou comme agent émulsionnant dans les industries textile, papetière, ou dans les industries du nettoyage.
